# FASCICULE DE BREVET EUROPEEN

(11) **EP 0 335 799 B1**
(45) Date de publication et mention de la délivrance du brevet: **18.08.1993**
(21) Numéro de dépôt: 89400878.8
(22) Date de dépôt: 29.03.1989
(51) Int. Cl.: H04Q 9/14

(54) **Procédés et circuits électroniques pour interroger à distance par fil des récepteurs électriques**
Elektronische Methoden und Schaltungen zur drahtgebundenen Fernabfrage von elektrischen Empfänger
Electronic methods and circuits for distant interrogation of electrical receivers by wire

(30) Priorité: 31.03.1988 FR 8804294
(43) Date de publication de la demande: 04.10.1989
(73) Titulaire: Lewiner, Jacques, F-92210 Saint-Cloud (FR); Hennion, Claude, F-75013 Paris (FR)
(72) Inventeur: Lewiner, Jacques, F-92210 Saint-Cloud (FR); Hennion, Claude, F-75013 Paris (FR); Smycz, Eugeniusz, F-92210 Siant-Cloud (FR)
(74) Mandataire: Behaghel, Pierre

(56) Documents cités:
- EP-A- 0 134 174
- DE-A- 2 521 388
- DE-A- 3 329 049
- FR-A- 2 509 889

## Description

L'invention est relative aux procédés et circuits électroniques conçus pour interroger des récepteurs à distance par fil et pour détecter les signaux émis par ces récepteurs en réponse à ces interrogations.

Les circuits en question sont par exemple des centrales de télécommande et de surveillance de serrures codées.

L'invention concerne plus particulièrement, parmi les circuits ci-dessus, ceux qui sont reliés aux récepteurs considérés par deux fils servant à acheminer à eux seuls l'énergie d'alimentation électrique des récepteurs, les signaux codés d'interrogation et les signaux codés de réponse.

Les signaux codés de réponse sont constitués généralement par des suites d'impulsions de tension et l'amplitude de ces impulsions, lorsqu'elles parviennent au circuit d'interrogation, est d'autant plus faible que les fils reliant ce circuit interrogation au récepteur sont plus longs.

Dans les modes de réalisation connus, pour éviter que ces impulsions soient confondues avec des parasites inévitables, on compare leurs amplitudes avec celles d'une tension fixe de référence.

Dans certaines circonstances, les amplitudes desdites impulsions varient dans le temps, par exemple lorsque certains contacts reliés aux fils ci-dessus sont intermittents, comme c'est le cas pour ceux qui commandent des clignotements de voyants lumineux ou autres, ou lors de certains réglages faisant intervenir des variations de courant, ou encore lors de la création d'extra-courants de rupture ou de fermeture dus à la mise en marche ou à l'arrêt de certains appareils ...

L'amplitude de certaines desdites impulsions peut alors passer au-dessous du seuil fixe de référence, ce qui fausse le décodage des signaux de réponse et rend l'ensemble inopérant.

L'invention a pour but, surtout, de supprimer cet inconvénient en permettant une détection extrêmement sensible et sûre des signaux de réponse considérés, même lorsque les impulsions qui les définissent sont associées à une tension d'alimentation dont l'amplitude varie en fonction du courant circulant dans les fils.

A cet effet, les procédés d'interrogation du genre en question selon l'invention comprennent encore les étapes consistant à comparer à une tension de référence la tension réelle définissant les signaux de réponse et à ne retenir que les portions, de ladite tension réelle, qui dépassent ladite tension de référence dans un sens déterminé, et ils sont essentiellement caractérisés en ce que l'on adopte pour ladite tension de référence une tension variable pondérée obtenue par filtrage passe-bas de ladite tension réelle.

Ce filtrage passe-bas est effectué de préférence à l'aide d'un circuit résistance-capacité dont la constante de temps est comprise entre T et 10T, si T désigne la durée la plus courte des impulsions et des intervalles entre impulsions définissant les signaux de réponse.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation de l'invention en se référant au dessin ci-annexé d'une manière bien entendu non limitative.

La figure 1, de ce dessin, montre très schématiquement un circuit électronique d'interrogation établi selon l'invention.

La figure 2 est un graphique montrant la forme de tensions développées en certains points de ce circuit.

D'une façon connue en soi, on fait comprendre au circuit d'interrogation considéré 1 :
- une source de courant continu 2 dont les deux bornes sont reliées respectivement, par deux conducteurs dont le premier comprend une résistance 3, à deux points de connexion extérieure A et B,
- une centrale 4 comprenant tous moyens désirables d'enregistrement, de calcul, d'élaboration et émission de signaux codés, ainsi que de réception et exploitation d'autres signaux codés, et présentant une entrée E et une sortie S,
- une gâchette composée d'un transistor 5 et d'une résistance 6 reliant la sortie S aux deux points A et B,
- et un comparateur 7 dont la sortie est reliée à l'entrée E de la centrale 4 et dont les deux entrées sont reliées respectivement au point A et à un dispositif propre à élaborer une tension de référence et sur lequel on reviendra plus loin.

Le circuit 1 considéré est destiné à interroger à distance au moins un récepteur 8 auquel il est relié par une ligne 9 à deux fils qui peut être très longue --sa longueur pouvant atteindre plusieurs kilomètres-- et qui peut donc présenter une résistance relativement importante.

Dans la pratique, de tels circuits sont par exemple utilisés pour assurer la télécommande codée de serrures, telles que celles équipant les chambres d'un hôtel, à partir d'un poste fixe, avec affichage automatique au niveau de ce poste de l'état verrouillé ou non de chaque serrure et/ou de l'état ouvert ou fermé de chaque porte équipée d'une serrure.

Le fonctionnement de l'ensemble est le suivant.

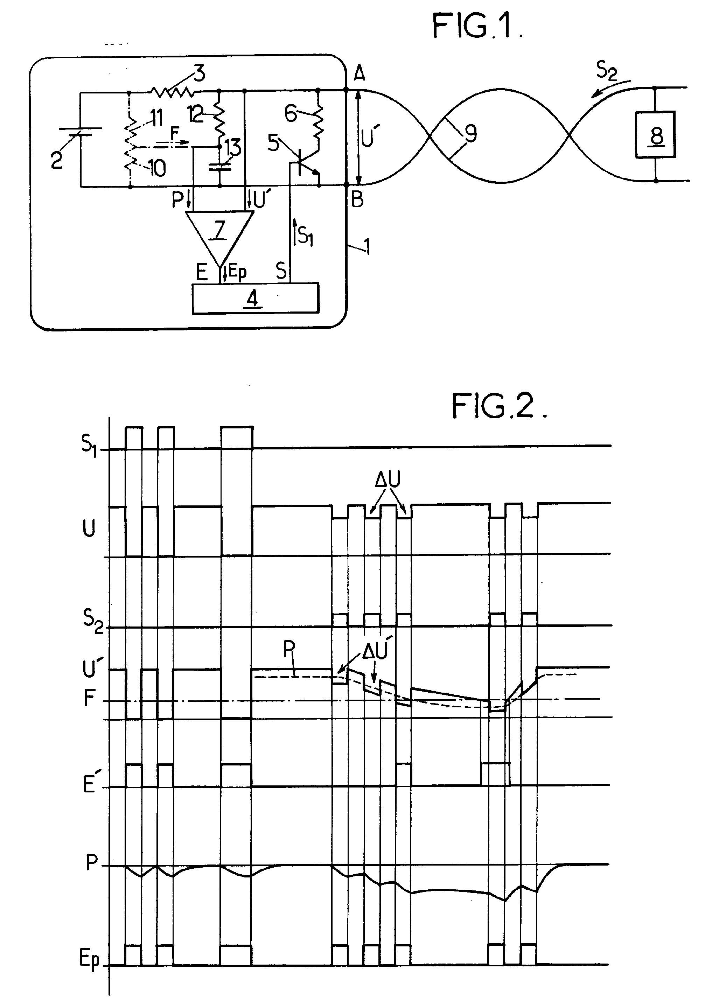

La centrale 4 émet initialement sur sa sortie S, pendant une première période correspondant à la portion de gauche de la figure 2, un signal codé S₁ qui a pour effet d'abaisser au rythme de son code la tension continue d'alimentation U présente entre les deux fils 9.

Après cette première période, la centrale 4 cesse d'émettre le signal codé S₁ et seule la tension continue d'alimentation U demeure appliquée sur la ligne 9.

Le message adressé représenté par la tension U codée par le signal S₁ au cours de la première période ci-dessus est détecté par les différents récepteurs 8 branchés sur la ligne 9.

On suppose que le code enregistré dans le récepteur 8 correspond à l'adresse du message ci-dessus : ce récepteur est agencé de façon telle que, juste après réception de ce message, il émette à son tour un signal codé de réponse S₂ qui rend compte de ladite réception et de préférence en outre de l'exécution d'une mission affectée au message considéré, mission telle que le déverrouillage momentané d'une serrure.

Cette émission du signal de réponse S₂ s'étend sur une seconde période correspondant à la portion de droite de la figure 2.

La différence de potentiel provoquée par l'application dudit signal S₂ sur la ligne 9 se traduit entre les points A et B par des réductions successives ΔU, d'amplitude relativement faible, de la tension continue U, réductions correspondant respectivement aux différentes impulsions de codage composant le signal S₂.

C'est la tension U découpée par ces réductions successives ΔU qui est comparée aux fins de détection à la tension de référence dans le comparateur 7.

Dans les modes de réalisation connus, ladite tension de référence est une tension fixe F qui est par exemple élaborée de la manière illustrée en traits mixtes sur la figure 1, c'est-à-dire à l'aide d'un diviseur de tension 10-11 branché aux bornes de la source 2.

L'utilisation d'une telle référence fixe présente l'inconvénient d'un manque de sécurité.

En effet cette tension de référence fixe doit être à la fois suffisamment différente de la tension U pour éliminer les parasites indésirables et suffisamment rapprochée de celle-ci pour permettre de détecter la plus petite des réductions de tension ΔU représentant le signal de réponse S₂ à détecter.

Or il peut arriver que certaines de ces réductions soient si faibles que leur amplitude soit inférieure à la différence entre les deux amplitudes des tensions U et F, de sorte que ces réductions échappent à la détection effectuée à l'aide du comparateur 7.

Plus précisément, si le courant total dans la ligne 9 demeure constant, la forme des réductions de tension ΔU successives représentant la tension S₂ entre les points A et B et de leur porteuse U est du genre de celle visible sur les trois premières lignes de la figure 2.

Ces formes se prêtent facilement à une détection par comparaison de la tension crénelée ou découpée U avec une tension de référence fixe dont l'amplitude F est convenablement choisie, c'est-à-dire comprise entre U et U-ΔU.

Mais si le courant total dans la ligne 9 varie, la forme des réductions successives de la tension U représentatives du signal de réponse S₂ et de leur porteuse U est du genre de celle visible en ΔU' sur la quatrième ligne de la figure 2.

Dans ces conditions, la comparaison des réductions de tension en question ΔU' avec une référence de valeur fixe F permet de détecter seulement certaines de ces réductions : les seules impulsions détectées par la comparaison ci-dessus et appliquées sur l'entrée E de la centrale 4 sont celles visibles en E' sur la figure 2.

En d'autres termes, la tension détectée E ne correspond pas au signal S₂ à détecter et le décodage de ce signal S₂ est erroné.

L'invention permet de remédier à cet inconvénient en donnant automatiquement à la tension de référence une valeur variable pondérée P qui tient compte automatiquement des déformations indésirables imposées aux impulsions représentant les signaux de réponse S₂ et à leur porteuse au cours de leur transfert entre le récepteur 8 et les points A et B.

Cette tension de référence pondérée P est obtenue selon l'invention par filtrage passe-bas de la tension réelle U' découpée ou hachée par les réductions successives ΔU'.

Ce filtrage est effectué à l'aide d'un circuit résistance 12-capacité 13 monté en série entre les points A et B et visible en trait plein sur la figure 1 : ce circuit résistance-capacité remplace ici le diviseur de tension 10-11 de l'art antérieur.

Si T désigne le temps le plus court qui sépare deux transitions successives des impulsions représentant le signal codé de réponse S₂, la constante de temps du circuit de filtrage ci-dessus est de préférence comprise entre T et 10T.

La tension pondérée P ainsi obtenue évolue en somme comme la valeur moyenne de la tension réelle U' découpée par les réductions ΔU'.

Son amplitude s'adapte donc automatiquement à celle du courant qui circule dans la ligne 9, ou de la tension U' correspondante, étant relativement faible lorsque les perturbations de la tension U' --dues à la fois aux réductions ΔU' et aux variations de la porteuse U'-- sont relativement faibles et au contraire relativement élevée lorsque lesdites perturbations sont relativement élevées.

Du fait de cette adaptation automatique à chaque instant du seuil de référence P à l'amplitude globale réelle des réductions ΔU' à détecter, on est assuré que la détection effectuée en comparant ces réductions à ce seuil et en ne retenant que celles, de ces réductions, qui franchissent ledit seuil, permet de détecter la totalité des "réductions" concernées, c'est-à-dire même celles qui présentent l'amplitude globale la plus faible.

La tension détectée Eₚ résultant de cette comparaison "pondérée", tension qui est appliquée à l'entrée E de la centrale 4, correspond alors intégralement au signal de réponse S₂ que l'on désire détecter.

En suite de quoi, et quel que soit le mode de réalisation adopté, on dispose finalement de circuits électroniques d'interrogation dont la constitution, le fonctionnement et les avantages (notamment la sensibilité et la sécurité de la détection des signaux codés de réponse) résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où des circuits complémentaires de ceux décrits en référence à la figure 1 seraient ajoutés à ceux-ci, tels qu'un amplificateur opérationnel branché aux bornes de la résistance 3 et dont la sortie serait connectée à l'entrée, du comparateur 7, autre que celle recevant la tension de référence,
- et celles où la liaison entre la centrale 4 et la ligne 9 serai assurée par des moyens autres que l'ensemble 5-6, par exemple par un photocoupleur permettant de protéger vis-à-vis des parasites dangereux créés sur la ligne 9 l'électronique de saisie des signaux de réponse à détecter.

## Revendications

1. Procédé pour interroger un récepteur (8) à distance par l'intermédiaire d'une ligne à deux fils (9) et pour détecter les signaux de réponse (S₂) émis par ce récepteur, selon lequel on compare à une tension de référence la tension réelle (U') définissant lesdits signaux de réponse et l'on ne retient que les portions, de ladite tension réelle, qui dépassent ladite tension de référence dans un sens déterminé, caractérisé en ce que l'on adopte pour la tension de référence une tension variable pondérée (P) obtenue par filtrage passe-bas de la tension réelle.

2. Circuit électronique pour interroger un récepteur (8) à distance par l'intermédiaire d'une ligne à deux fils (9) et pour détecter les signaux de réponse (S₂) émis par ce récepteur, comprenant des moyens (7) pour comparer à une tension de référence la tension réelle (U') définissant lesdists signaux de réponse et pour ne retenir que les portions, de ladite tension réelle, qui dépassent ladite tension de référence dans un sens déterminé, ledit circuit mettant en oeuvre le procédé selon la revendication 1, caractérisé en ce qu'un filtrage passe-bas de la Tension réelle est effectué pour obtenir une tension variable pondérée (P) adoptée comme tension de référence, le filtrage passe-bas étant effectué à l'aide d'un circuit résistance (12)-capacité (13) dont la constante de temps est comprise entre T et 10T si T désigne la durée la plus courte des impulsions et des intervalles entre impulsions définissant les signaux de réponse (S₂).

## Patentansprüche

1. Verfahren zum Fernabfragen eines Empfängers (8) mittels einer Leitung (9) mit zwei Drähten und zum Erfassen der von diesem Empfänger ausgesendeten Antwortsignale (S₂), gemäß welchem Verfahren die tatsächliche, die besagten Antwortsignale festlegende Spannung (U') mit einer Referenzspannung verglichen wird und nur die beschnitte der tatsächlichen Spannung behalten werden, welche die Referenzspannung in einer bestimmten Richtung überschreiten,
**dadurch gekennzeichnet, daß**
als die Referenzspannung eine variable, gewichtete Spannung (P) genommen wird, die durch Tiefpaßfilterung der tatsächlichen Spannung erhalten wird.

2. Elektronische Schaltung zum Fernabfragen eines Empfängers (8) mittels einer Leitung (9) mit zwei Drähten und zum Erfassen der von diesem Empfänger ausgesendeten Antwortsignale (S₂), umfassend Mittel (7), um die diese Antwortsignale festlegende tatsächliche Spannung (U') mit einer Referenzspannung zu vergleichen und um nur die beschnitte der tatsächlichen Spannung zu behalten, welche die Referenzspannung in einer bestimmten Richtung übersteigen, wobei die Schaltung das Verfahren nach Anspruch 1 durchführt,
**dadurch gekennzeichnet, daß**
eine Tiefpaßfilterung der tatsächlichen Spannung durchgeführt wird, um eine variable, gewichtete Spannung (P) zu erhalten, die als Referenzspannung genommen wird, wobei die Tiefpaßfilterung mit Hilfe einer Widerstands(12)-Kapazitäts(13)-Schaltung durchgeführt wird, deren Zeitkonstante zwischen T und 10T liegt, wenn T die kürzeste Zeitdauer der Impulse und der Intervalle bezeichnet, die zwischen Impulsen liegen, welche die Antwortsignale (S₂) definieren.

## Claims

1. A method for remote interrogation of a receiver (8) through a two wire line (9) and for detecting the response signals (S₂) emitted by this receiver, according to which the actual voltage (U') defining said response signals are compared to a reference voltage and only the portions, of said actual voltage, which exceed said reference voltage in a pre-determined direction are retained, characterized in that, as reference voltage, a weighted variable voltage (P) obtained by low band-pass filtering of the actual voltage is adopted.

2. An electronic circuit for remote interrogation of a receiver (8) through a two wire line (9) and for detecting the response signals (S₂) emitted by this receiver, comprising means (7) for comparing with a reference voltage the actual voltage (U') defining said response signals and for only retaining the portions, of said actual voltage, which exceed said reference voltage in a pre-determined direction, said circuit embodying the method according to the claim 1, characterized in that a low band-pass filtering of the actual voltage is made in view of obtaining a weighted variable voltage (P) which is adopted as reference voltage, the low band-pass filtering being effected by means of a resistance (12)- capacity (13) circuit whose time constant is comprised between T and 10T if T denotes the shortest duration of the pulses and of the gaps between pulses defining the response signals (S₂).
